# EUROPEAN PATENT APPLICATION

(11) **EP 2 778 849 A1**
(43) Date of publication of application: **17.09.2014**
(21) Application number: 14159156.0
(22) Date of filing: 12.03.2014
(51) Int. Cl.: G06F 3/01, G06F 3/041

(54) **Method and apparatus for operating sensors of user device**

(30) Priority: 14.03.2013 KR 20130027223
(71) Applicant: Samsung Electronics Co., Ltd., Suwon-si Gyeonggi-do 443-742 (KR)
(72) Inventor: Kim, Daesung, 443-742 Gyeonggi-do (KR); Kang, Jiyoung, 443-742 Gyeonggi-do (KR); Kim, Jinyong, 443-742 Gyeonggi-do (KR); Lee, Boyoung, 443-742 Gyeonggi-do (KR); Lim, Seungkyung, 443-742 Gyeonggi-do (KR); Jeon, Jinyoung, 443-742 Gyeonggi-do (KR)
(74) Representative: Jenkins, Richard Gavin

(57) **Abstract**

A method of operating a plurality of sensors of a user device includes detecting input using a user input means, measuring a depth value between the user input means and a screen of the user device, activating a gesture recognition function by selectively driving one or more of the plurality of sensors based on the measured depth value, and recognizing a user gesture based on pieces of information collected by the selectively driven sensors.

## Description

### BACKGROUND OF THE INVENTION

### 1. Field of the Invention

The present invention generally relates to a method and apparatus for operating sensors of a user device, and more particularly, to a method and apparatus for operating sensors of a user device that recognizes various types of user gestures.

### 2. Description of the Related Art

User devices, for example, smart phones, tablet PCs, and laptops, are used in a variety of fields due to their convenience of use and portability. A user device supports the intuitive use of functions by providing various content and functions through a display unit. A user can manipulate content and functions displayed in a display unit or input necessary information to a device using various means of input, such as touch, voice, and motion.

A user device may be equipped with various types of sensors for recognizing various inputs of a user. The sensors are classified depending on the distance between the device and a space where the input of a user is performed, and the sensors can, within specified limits, recognize the input of a user depending on the direction of a motion and characteristics of an environment. For example, a capacitive touch sensor recognizes the input of a user based on changes in the capacitance value of the body of the user. A capacitive touch sensor can accurately detect the position of the user's input, but has a disadvantage in that accuracy may decrease due to a small change of the capacitance value when the distance between the device and the user is a specific value or greater. An infrared sensor has the widest distance recognition range for a user input, but has a disadvantage in that the position of a user input may not be accurately recognized.

In a conventional user device, the various sensors may have different constraint conditions which are individually driven. For this reason, the user device has a limited recognition range for the user's input, though the user device may include various sensors.

### SUMMARY

The present invention has been made to address at least the problems and disadvantages described above and to provide at least the advantages described below. Accordingly, an aspect of the present invention provides a method and apparatus for operating sensors of a user device that extend the recognition range of a user input while organically operating in conjunction with various sensors according to the distance between a user device and a user.

Furthermore, the present invention provides a method and apparatus for operating sensors of a user device that reduces the power consumption of a user device and improves the accuracy of a user input by supplementing the limits of one sensor through the use of another sensor.

According to an aspect of the present invention, a method of operating a plurality of sensors of a user device includes detecting a user input means, measuring a depth value between the user input means and a screen of the user device, activating a gesture recognition function by selectively driving one or more of the plurality of sensors based on the measured depth value, and recognizing a user gesture based on pieces of information collected by the selectively driven sensors.

According to another aspect of the present invention, a user device includes a sensor unit configured to include a plurality of sensors for detecting a user input and a change of input, and a control unit configured to detect a user input means, measure a depth value between the user input means and a screen of a user device, activate a gesture recognition function by selectively driving one or more of the plurality of sensors based on the measured depth value, and recognize a user gesture based on pieces of information collected by the selectively driven sensors.

### BRIEF DESCRIPTION OF THE DRAWINGS

The above and other aspects, features and advantages of embodiments of the present invention will be more apparent from the following detailed description taken in conjunction with the accompanying drawings in which:
FIG. 1 is a block diagram illustrating a configuration of a mobile terminal in accordance with an embodiment of the present invention;
FIG. 2 is a flowchart illustrating a method for operating sensors of a mobile terminal in accordance with an embodiment of the present invention
FIG. 3 illustrates a method for operating sensors of a mobile terminal in accordance with an embodiment of the present invention;
FIG. 4 illustrates a user interaction with a mobile terminal based on the method of operating sensors in accordance with an embodiment of the present invention;
FIG. 5 illustrates a user interaction with a mobile terminal based on the method of operating sensors in accordance with another embodiment of the present invention;
FIG. 6 illustrates screens of a mobile terminal in which different visual feedback is provided according to the distance between the mobile terminal and the user's hand based on the method of operating sensors in accordance with an embodiment of the present invention; and
FIGS. 7A to 9G illustrate various user gestures recognized by a mobile terminal based on the method of operating sensors in accordance with an embodiment of the present invention.

### DETAILED DESCRIPTION OF EMBODIMENTS OF THE PRESENT INVENTION

A method and apparatus for operating sensors of a user device according to an embodiment of the present invention are described in detail with reference to the accompanying drawings. Prior to a detailed description of the present invention, terms or words used hereinafter should not be construed as having common or dictionary meanings, but should be construed as having meanings and concepts that comply with the technical field of the present invention. Accordingly, the following description and drawings illustrate embodiments of the present invention and do not limit the scope of the present invention. It would be understood by one of ordinary skill in the art that a variety of equivalents and modifications of the embodiments exist. Furthermore, in the accompanying drawings, some elements are illustrated as being enlarged and are illustrated schematically. The size of each element does not accurately reflect its real size. Accordingly, the present invention is not restricted by the relative sizes or spaces that are drawn in the figures.

The method and apparatus according to the present invention may be applied to a mobile terminal. The mobile terminal may be a mobile phone, a smart phone, a tablet PC, a hand-held PC, a Portable Multimedia Player (PMP), or a Personal Digital Assistant (PDA). In the following description, a method and apparatus for operating sensors of a user device, according to the present invention, is assumed to be applied to a mobile terminal.

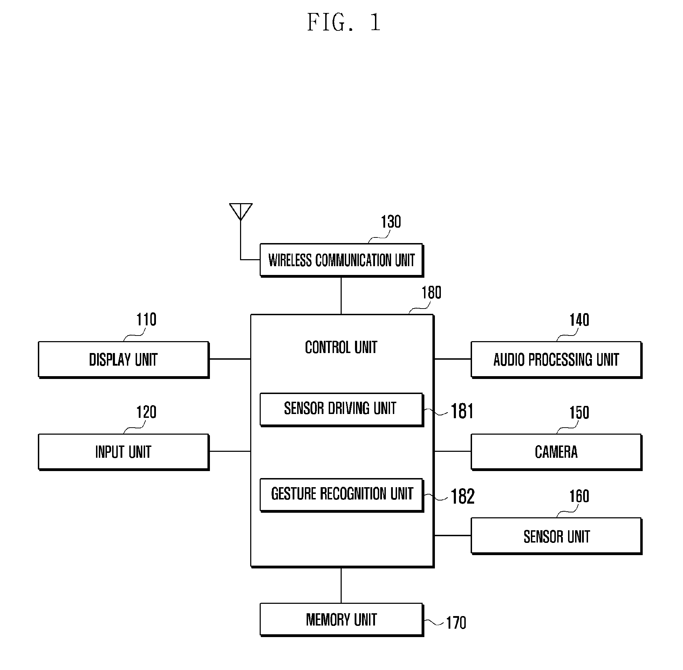

FIG. 1 is a block diagram illustrating a configuration of a mobile terminal in accordance with an embodiment of the present invention.

Referring to FIG. 1, in an embodiment of the present invention, the mobile terminal includes a display unit 110, an input unit 120, a wireless communication unit 130, an audio processing unit 140, a camera 150, a sensor unit 160, a memory unit 170, and a control unit 180.

The display unit 110 displays various function screens necessary for the steps of the mobile terminal. The display unit 110 converts image data, received from the control unit 180 into an analog signal and displays the analog signal under the control of the control unit 180. The display unit 110 includes a display panel for providing various screens when operating the mobile terminal and a touch panel for supporting the generation of an input event on the front or rear of the display panel. A resistive, capacitive, or electromagnetic induction type panel may be used for the touch panel.

The display unit 110 supports a function of changing a graphic effect of a screen corresponding to a user's specific gesture based on a depth value, that is, the distance between the screen and a user input means, and outputting the changed graphic effect.

The input unit 120 generates various input signals for the steps of the mobile terminal. The input unit 120 includes a plurality of input keys and function keys, for example, a side key, a hot key, and a home key for receiving numeric or alphabetic information and setting various functions. The input unit 120 generates key signals related to user setting and control of a function of the mobile terminal and transfers the key signals to the control unit 180. The control unit 180 controls functions according to corresponding input signals in response to the key signals. If the touch panel of the mobile terminal 100 is supported in a full touch screen form, the input unit 120 may be provided in the form of a virtual touch pad. Furthermore, if a touch panel is included in the display unit 110, the display unit 110 operates as the input unit 120. In this case, an input signal for a step of the mobile terminal is generated through the touch panel.

The wireless communication unit 130 performs the communication of the mobile terminal. The wireless communication unit 130, together with a supportable mobile communication network, forms a communication channel and performs communications, such as voice communication, video communication, and data communication. The wireless communication unit includes a radio frequency receiver for performing low-noise amplification and down-conversion on the frequency of a transmitted signal. If a mobile terminal does not provide a wireless communication function, the wireless communication unit 130 may be omitted.

The audio processing unit 140 includes a speaker for supporting the output of an audio signal generated from or decoded by the mobile terminal 100 and a microphone for collecting an audio signal in order to support a voice call, video telephony, and a recoding function. The audio processing unit 140 may include a coder/decoder (i.e., codec). The codec may include a data codec for processing packet data and an audio codec for processing an audio signal, such as voice. The audio processing unit 140 converts a received digital audio signal into an analog signal through the audio codec and plays back the analog signal through the speaker. The audio processing unit 140 converts an analog audio signal, received through the microphone, into a digital audio signal through the audio codec and transfers the digital audio signal to the control unit 180.

The camera 150 collects images through capturing and provides the collected images. The camera 150 includes a camera sensor for converting a received optical signal into an electrical signal, an image signal processor for converting the analog image signal obtained by the camera sensor into digital data, and a digital signal processor for performing image processing (e.g., scaling, removal of noise, and conversion into an RCG signal) on the video signal in order to display the digital data output from the image signal processor on a touch screen. The camera sensor may be a Charge-Coupled Device (CCD) sensor or a Complementary Metal-Oxide Semiconductor (CMOS) sensor, and a DSP may be used instead of the digital signal processor. The camera 150 supports a sensor function for recognizing a user gesture under the control of the control unit 180. The camera 150 may be selectively turned on in the form of a background function, thus being capable of transferring images collected through a lens to the control unit 180.

The sensor unit 160 detects a change in the input of a user and a change in surrounding environments, and transfers corresponding information to the control unit 180. The sensor unit 160 includes various types of sensors, for example, a touch sensor for recognizing a touch input, a proximity sensor for detecting the approach of an external object or a user input means, a distance measurement sensor for measuring the distance between a touch input means and the mobile terminal, an image sensor for collecting images, a motion recognition sensor for recognizing a motion and movement in a 3-D space, a direction sensor for recognizing a direction, an acceleration sensor for detecting moving speed, and an environment detection sensor. In the sensor unit 160, different sensors are driven according to the distance between a user and the mobile terminal, that is, a depth value. The sensor unit 160 supports a function for transferring information collected by driving sensors to the control unit 180.

The memory unit 170 stores an Operating System (OS) and various applications (hereinafter referred to as App(s)) of the mobile terminal 100 and various data generated from the mobile terminal. The data may include data that is generated when an App of the mobile terminal is executed as well as other types of data that are generated using the mobile terminal or received from the outside (e.g., an external server, another mobile terminal, or a PC) and stored. The memory unit 170 stores user interfaces provided by the mobile terminal and information on various types of settings related to the processing of mobile terminal functions. The memory unit 170 also stores a mapping table for determining user gestures. The mapping table may be a database for storing a gesture based on a touch, a gesture based on hovering, and a gesture based on an image (e.g., a hand motion). If the mapping table is provided through a specific server, the mobile terminal accesses the specific server and recognizes a user gesture according to a user input. The memory unit 170 also stores information on the execution of a function that is set step by step based on a depth value between a screen and a user input means in response to a specific user gesture.

The control unit 180 controls the overall step of the mobile terminal and the flow of signals between the internal elements of the mobile terminal. The control unit 180 also performs a function for processing data. The control unit 180 controls the supply of power from a battery to the internal elements. When being powered, the control unit 180 controls a process of booting up the mobile terminal and executes various applications stored in a program region in order for the mobile terminal to execute a function in response to user setting.

The control unit 180 includes a sensor driving unit 181 and a gesture recognition unit 182. The sensor driving unit 181 measures a depth value between a user input means and a screen when the sensor unit 180 detects the approach of the user input means. The user input means may be the user's hand or a touch pen, but is not limited thereto. The control unit 180 determines whether or not the user's hand approaches based on whether or not heat is detected by the infrared sensor. The sensor driving unit 181 selects one or more driving sensors of the plurality of sensors based on a depth value of the user's hand. For example, if the user's hand approaches a screen, the sensor driving unit 181 drives only the touch sensor. In contrast, if the user's hand is far from a screen, the sensor driving unit 181 turns off the touch sensor because a user input based on the touch sensor is limited. However, the sensor driving unit 181 turns on the infrared sensor or the camera sensor in order to collect user input information. If the step of a specific sensor stops, the sensor driving unit 181 controls a driving sensor so that the driving sensor is turned off. Furthermore, the sensor driving unit 181 drives a driving sensor in a sleep mode or a standby mode so that the step of the driving sensor is stopped. If a sensor in a sleep mode or a standby mode needs to be driven again, the sensor driving unit 181 transfers an interrupt signal to the sensor in order to drive the sensor.

The sensor driving unit 181 selectively drives selected sensors, collects information on the driven sensors from the driven sensors, and transfers the collected information to the gesture recognition unit 182. The gesture recognition unit 182 supports a function of determining a user gesture based on information on selectively driven sensors. The user gesture may include a touch gesture, a hovering gesture, and a hand motion gesture, but the user gesture is not limited thereto. The gesture recognition unit 182 extracts characteristics (e.g., a change of a position, a change of a behavior, and a change of distance) according to a user input from driving sensors and recognize a user gesture matched with the extracted characteristics.

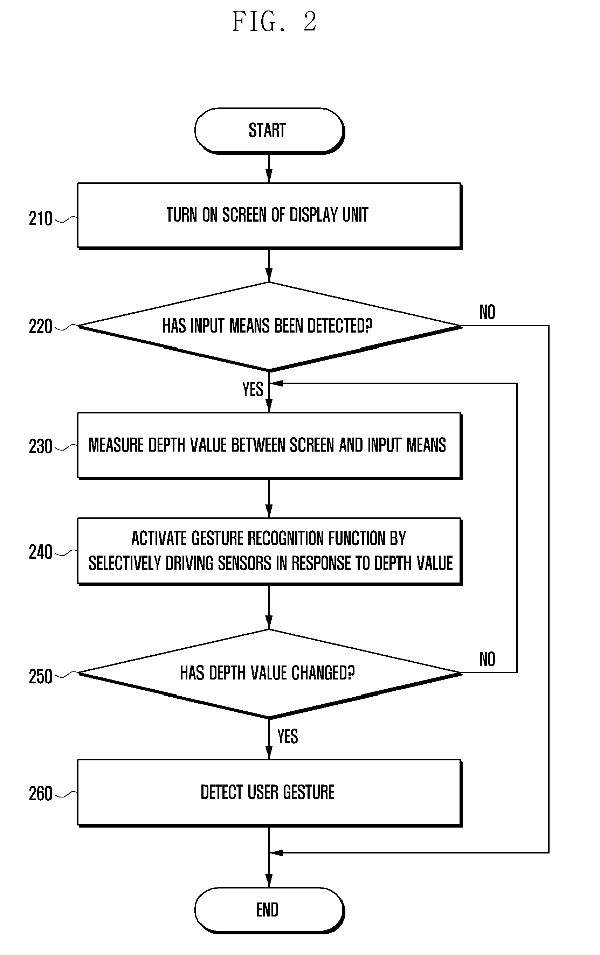

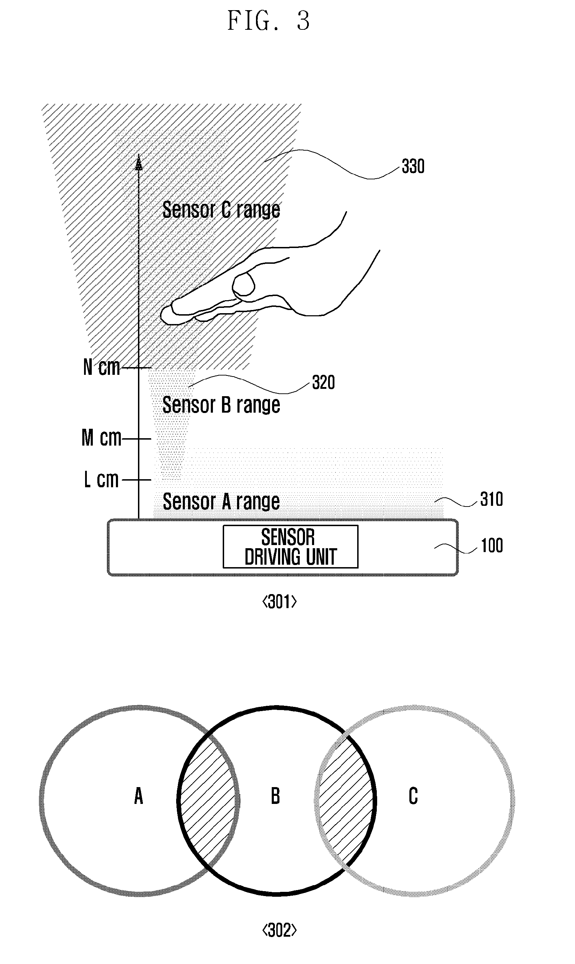

The function of the control unit 180 is described in detail below with reference to FIGS. 2 and 3.

FIGS. 2 and 3 illustrate a method for operating the sensors of the mobile terminal in accordance with an embodiment of the present invention.

Referring to FIGS. 2 and 3, at step 210, the mobile terminal turns on a screen of the display unit 110 in response to a user input or according to a predetermined schedule. In this case, the mobile terminal operates in a standby mode in which the input of a user is ready to be received and outputs an execution screen according to the step of the mobile terminal to a standby screen. The execution screen may include a home screen, an App execution screen, a menu screen, a keypad screen, a message writing screen, an Internet screen, and a locking screen.

At step 220, the mobile terminal determines whether or not an approach event has been detected. A user may bring a user input means, for example, a touch pen or the user's hand, close to the mobile terminal.

The approach event includes the detection of an object that approaches the mobile terminal through the touch sensor or the infrared sensor, but the approach event is not limited to the detection of an object. For example, if a touch panel is of a capacitive type, the touch sensor can detect the human body (e.g., the hand) that approaches the mobile terminal based on a capacitance value that is changed in the touch panel. Furthermore, the infrared sensor can detect a hand that approaches the mobile terminal by detecting a change of infrared rays generated from the human body. When the approach event is detected, the mobile terminal recognizes that the user input means has approached a screen.

At step 230, the mobile terminal measures the distance between the user input means approaching the screen and the screen, that is, a depth value. The user input means may be the user's hand or a touch pen. In the embodiments of the present invention described herein, the user input means is assumed to be the user's hand. The depth value can be measured by the infrared sensor, but the present invention is not limited thereto. For example, if the mobile terminal is equipped with an infrared sensor, infrared rays generated from a light-emitting unit are reflected from an object and then received by a light-receiving unit. Here, the infrared sensor transfers information on a change of voltage according to the amount of received infrared rays to the control unit 180. The control unit 180 measures the distance between the user input means and the screen based on the information on a change of voltage.

At step 240, the mobile terminal activates a gesture recognition function by selectively driving one or more of the plurality of sensors in response to the measured depth value. The gesture recognition function is activated depending on sensors that are driven in response to a depth value between the user input means and the screen under the control of the control unit 180.

For example, as shown in FIG. 3, the mobile terminal of the present invention is assumed to include a sensor A for detecting the input of a user in a first recognition region 310, a sensor B for detecting the input of a user in a second recognition region 320, and a sensor C for detecting the input of a user in a third recognition region 330.

The sensor A recognizes a user input means that approaches or touches a screen within a distance of 0 - L cm (e.g., 0 - 11 cm). The sensor B recognizes a user input means within a distance of M cm ∼ ∞ cm (e.g., 1 cm - 300 cm). The sensor C recognizes a user input means within a distance of N cm ∼ ∞ cm. The characteristics of the sensor A, the sensor B, and the sensor C are listed in Table 1 below and are illustrative only, provided solely for the convenience of describing the sensors, and the present invention is not limited thereto.

**Table 1**

| | SENSOR A | SENSOR B | SENSOR C |
|---|---|---|---|
| Recognizable range | Finger: ∼ 3 cm Movement of hand: ∼ 1 cm x, y, z coordinates: ∼ 3 cm Proximity direction: ∼ 5cm Proximity On/Off:5 ∼ 10 cm | Proximity direction: 1 ∼ 7 cm Proximity On/Off: 6 ∼ 11 cm Distance measurement: 1 ∼ 300 cm (depending on sensor) | Distance measurement: 1 ∼ cm (different depending on lens) |
| Driving range | 0 ∼ L cm (nearest and near regions to terminal) | M ∼ ∞ cm (spaces other than space nearest to terminal) | N ∼ ∞ cm (shape-recognizable range) |
| Recognition target | Accurate recognition coordinates for human body, such as fingertip and palm, and recognition of depth, direction, and proximity on/off | Recognition of depth, direction, and proximity on/off. Distinguish hand and stylus through thermal detection | Based on relative coordinates. Recognition of direction, image pattern, and shape (hand, head, and body) |
| Advantages | High accuracy, no influence of illuminance | Low power driving, no influence of illuminance, and widest recognition depth range | Advantageous for long distance gesture input |
| Disadvantages | High power consumption, and frequent malfunction attributable to contact of human body in close range | Recognizable depth is widest, but xy-axis reference range is smallest | Great influence of illuminance, and high power consumption |

As shown in Table 1, the sensors A, B, and C vary in the range in which the input of a user is recognized. In the prior art, sensors included in a mobile terminal have limited ranges in which the input of a user is recognized because they individually operate according to respective recognition regions.

According to an embodiment of the present invention, the mobile terminal recognizes various user gestures by selectively driving sensors according to the distance between a user input means and a screen. To this end, the mobile terminal supports a function of selectively driving the sensor A, the sensor B, and sensor C according to the characteristics of each sensor in a form shown in 302 of FIG. 3 based on a depth value between a user input means and a screen. For example, if a user input means is placed within L cm, the mobile terminal drives only the sensor A. The mobile terminal detects a touch and hovering in response to a signal received from the sensor A and recognize the direction, accessibility, information on coordinates, and a depth value related to a user input.

If a user input means is placed within L - M cm, the mobile terminal drives the sensor A and the sensor B. If the position of the user input means is changed into a position within L cm in the state in which the sensor A and the sensor B have been driven, the mobile terminal stops the sensor B from operating. The mobile terminal turns off the sensor B when the sensor B stops operating, but the present invention is not limited thereto. For example, the mobile terminal may control the sensor B so that the sensor B operates in a sleep mode or a standby mode. The sensor B operating in a sleep mode or a standby mode starts its sensor function again when an interrupt signal is generated.

If a user input means is placed within M - N cm, the mobile terminal drives only the sensor B. If a user input means is placed within N cm ∼ ∞ cm, the mobile terminal drives the sensor B and the sensor C. For example, the sensor A may be a touch sensor, the sensor B may be an infrared sensor, and the sensor C may be a camera sensor, but the present invention is not limited to the example.

As shown in 302 of FIG. 3, there may be regions in which the first recognition region 310 of the sensor A may overlap with the second recognition region 320 of the sensor B and the second recognition region 320 of the sensor B may overlap with the third recognition region 330 of the sensor C.

If two or more sensors are driven, the mobile terminal supports driving the sensors in a complementary fashion. For example, the mobile terminal may drive the sensor A and the sensor B so that the sensor A is driven to recognize only coordinates because the sensor A has high power consumption and the sensor B is driven to recognize direction and a depth value.

Furthermore, if a signal received from one sensor is weaker than a signal received from the other sensor, the mobile terminal recognizes a user gesture based on the stronger signal received from the other sensor. The mobile terminal may detect the human body through the sensor B and determine whether or not a human body detection signal is received through the sensor A in order to improve accuracy in detecting the human body, thus being capable of improving the accuracy of the subject of recognition.

At step 250, the mobile terminal determines whether or not the depth value of the user input means has been changed. If it is determined that the depth value has not changed, the mobile terminal returns to step 230 in which the mobile terminal selectively drives sensors based on the depth value.

If it is determined that the depth value has changed, the mobile terminal detects a user gesture using the sensors that are selectively driven based on the depth value of the user input means at step 260. The mobile terminal performs a predetermined execution command in response to the detected user gesture.

As described above, in embodiments of the present invention, different sensors are driven in response to a depth value between a user and the mobile terminal, and information collected by driving sensors may vary. The mobile terminal recognizes a variety of user inputs using sensors that are selectively driven in response to a depth value. Accordingly, the mobile terminal subdivides and operates a function although information collected by sensors indicates the same gesture because the collected information is different depending on the distance.

Detailed examples of a user interaction based on the method of operating sensors according to the present invention are described below.

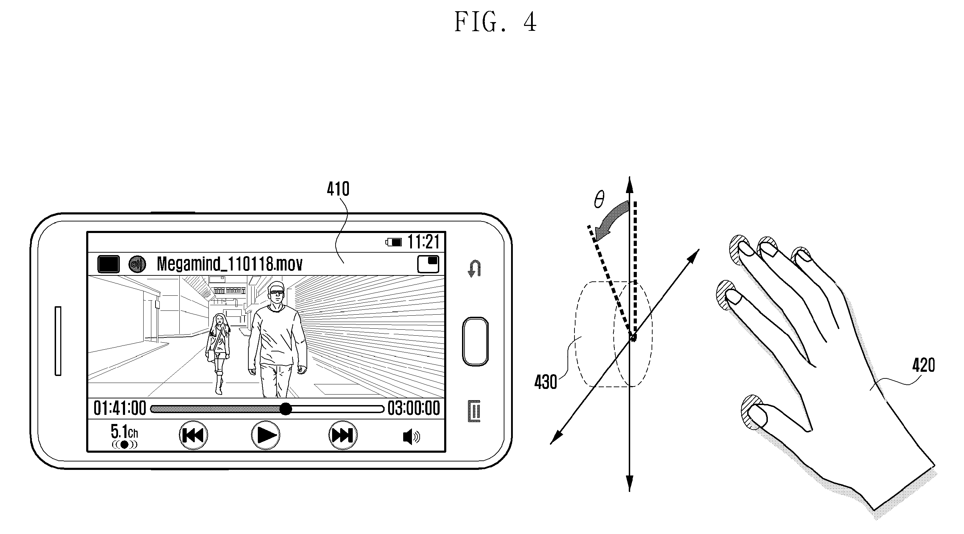

FIG. 4 illustrates a user interaction with a mobile terminal based on the method of operating sensors in accordance with an embodiment of the present invention. In FIG. 4, a user gesture is described as being a gesture of turning a virtual jog dial 430 assuming that the virtual jog dial is present over a screen, but the present invention is not limited thereto.

Referring to FIG. 4, the mobile terminal outputs a video playback screen 410 to the display unit 110 in response to a request from a user.

The user can bring their hand 420 close to the screen in order to execute a specific function for a moving image. The mobile terminal detects the approach event and measures a depth value (e.g., the distance) between the user's hand 420 and the screen. The mobile terminal activates a gesture recognition function by selectively driving sensors based on the measured depth value.

The user may make a gesture of turning the virtual jog dial 430 in order to change the playback time while playing back the moving image. In response to the gesture, the mobile terminal detects input (e.g., input to a multi-touch region or a multi-hovering region) using a fingertip based on the selectively driven sensors. If a motion that exceeds a specific angle θ from the origin that is first input is detected, the mobile terminal determines that the gesture of turning the virtual jog dial 430 has been made. In this case, the mobile terminal moves the playback of the moving image back and forth or executes a fast rewind function depending on the motion direction of the gesture.

In an embodiment of the present invention, the mobile terminal subdivides and recognizes the input of a user in response to signals collected by sensors because different sensors are activated based on the distance between the user's hand 420 and the screen.

For example, the user's hand 420 may have a state in which the hand 420 has touched the screen, a state in which the hand 420 has been separated from the screen at a first distance, a state in which the hand 420 has been separated from the screen at a second distance, and a state in which the hand 420 has been separated from the screen at a third distance. If the hand 420 has touched the screen, the mobile terminal may selectively drive only a first sensor. If the hand 420 has been separated from the screen at the first distance, the mobile terminal may drive the first sensor and a second sensor. If the hand 420 has been separated from the screen at the second distance, the mobile terminal may drive only the second sensor. If the hand 420 has been separated from the screen at the third distance, the mobile terminal may drive the second sensor and the third sensor.

Information on a recognizable user input and information on classified functions according to activated sensors are listed in Table 2 below.

**Table 2**

| | 1^{ST} SENSOR | 1^{ST} AND 2^{ND} SENSORS | 2^{ND} SENSOR | 2^{ND} AND 3^{RD} SENSORS |
|---|---|---|---|---|
| Gesture recognition | Recognize three or more touch & hovering points, and direction | 1^{st} sensor: recognize three or more touch & hovering points in IR blind spot, and direction. | 2^{nd} sensor: recognize direction and z-depth by recognizing hand and finger, and distinguish z-depth and change movement unit | 2^{nd} sensor: recognize z-depth |
| | | | | 3^{rd} sensor: recognize fingertip and hand shape |
| | | 2^{nd} sensor: recognize direction by recognizing hand and finger and recognize z-depth | | |
| Function control unit | Very precise unit (e.g., 2 seconds) | Precise unit (e.g., 10 seconds) | Normal unit(e.g., 60 seconds)/large unit (e.g., 5 minutes) | Very large unit (e.g., 10 minutes) |

As described above, a user can control a function, such as a fast rewind function or a rewind function, in a very small unit or control the function in a large unit based on a depth value between the hand 420 of the user and the screen. Furthermore, the gesture of turning the virtual jog dial can be applied to various Apps, such as a volume control function and an audio channel search function, in addition to the playback of a moving image.

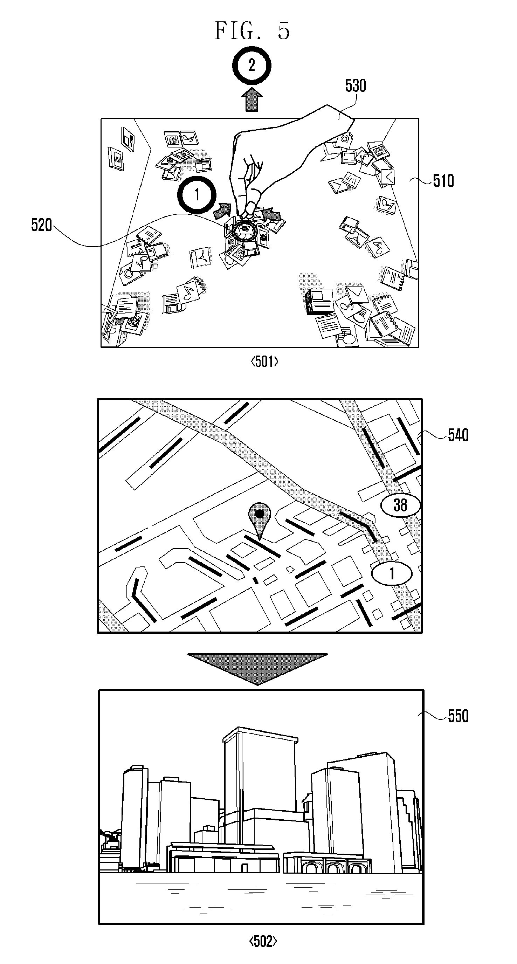

FIG. 5 illustrates a user interaction with a mobile terminal based on the method of operating sensors in accordance with another embodiment of the present invention. In FIG. 5, a user gesture is described as being a gesture of grabbing and pulling up an object, but the present invention is not limited thereto.

Referring to FIG. 5, the mobile terminal outputs a screen 510, including at least one object, in response to a user input.

The user may bring their hand 530 close to the screen 510 in order to manipulate the screen displayed on the display unit 110. In response thereto, the mobile terminal selects sensors in response to a depth value between the hand 530 and the screen 510.

The user may make a gesture of grabbing a specific object 520 displayed on the screen using the hand 530 and make a gesture of bringing the specific object 520 far away from the screen. In response thereto, the mobile terminal selects the specific object 520 displayed at a position corresponding to a region in which a fingertip has been detected and output a graphic effect, such as an effect in which the selected specific object is pulled up.

In this case, driving sensors may be changed in response to a depth value between the hand 530 of the user and the screen 510, but the mobile terminal maintains the recognition of the gesture of pulling up the specific object 520.

Furthermore, as shown in 502 of FIG. 5, the mobile terminal outputs a 2-D map screen 540 to the display unit in response to a request from the user. In this case, a specific position in the 2-D map screen may be selected. In the state in which the 2-D map screen has been displayed, the user can make a gesture of grabbing an object and a gesture of bringing the object far away from the screen.

In response thereto, the mobile terminal recognizes the grab gesture and the pull-up gesture and provides a graphic effect in which a screen 550 including a map corresponding to the selected position of the specific position is output in a 3-D graphic form.

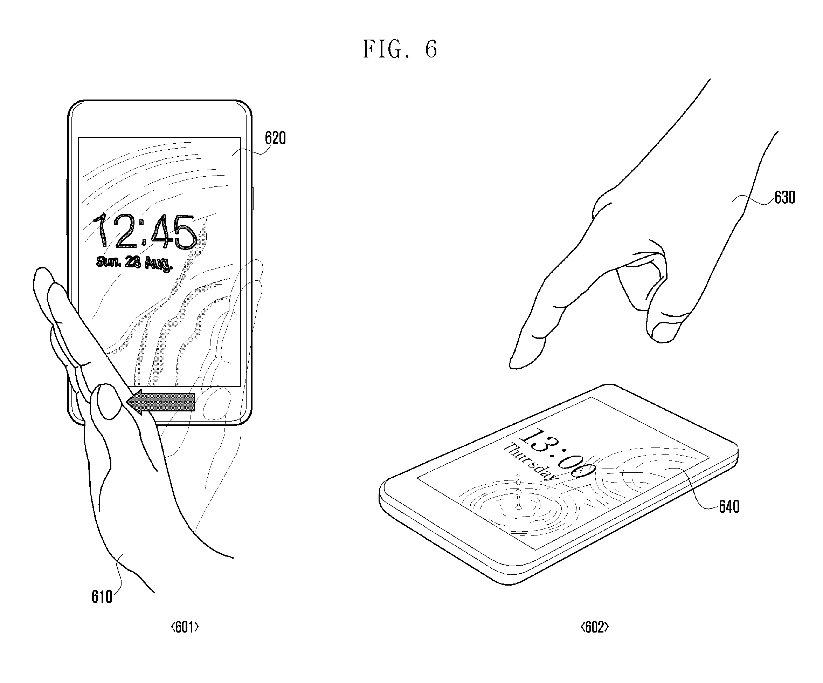

FIG. 6 illustrates screens of a mobile terminal in which different visual feedback is provided according to the distance between the mobile terminal and the user's hand based on the method of operating sensors in accordance with an embodiment of the present invention.

Referring to FIG. 6, the mobile terminal can change, in different ways, a graphic effect for a screen, based on a specific gesture of a user and according to the distance between the screen and the user's hand. The mobile terminal then provides the changed graphic effect.

For example, as shown in 601 of FIG. 6, a user may bring his hand close to a screen 620 and make a sweep gesture 610 of rapidly moving the hand. In response thereto, the mobile terminal recognizes the sweep gesture 610 of the user and provides a graphic effect in which waves rise in the screen 620 in response to the sweep gesture 610. In accordance with an embodiment of the present invention, if the user brings his hand closer to the screen and makes the sweep gesture 610, the mobile terminal outputs a graphic effect in which stronger waves rise in the screen 620. If the user brings his hand far away from the screen and then makes the sweep gesture 610, the mobile terminal outputs a graphic effect in which weaker waves rise in the screen 620. For example, graphic effects for sensors according to the sweep gesture 610 are listed in Table 3 below, but the present invention is not limited to the example.

**Table 3**

| 1^{ST} SENSOR | 1^{ST} AND 2 ^{ND} SENSORS | 2^{ND} SENSOR | 2^{ND} AND 3^{RD} SENSORS |
|---|---|---|---|
| - Recognize hand knife(hand edge distal to thumb) | - Recognize depth value | - Recognize direction and depth value of hand | - Recognize depth value |
| - Measure motion direction and speed (can recognize finger gesture) | - Recognize handknife | | - Recognize handmotion (can recognize hand gesture) |
| | - Measure motion direction and speed of hand knife | - Graphic effect in which waves rise at third stage weaker than second stage in hand motion direction | |
| - Graphic effect in which waves strongly rise at first stage in direction in which hand is swept | - Graphic effect in which waves rise at second stage weaker than first stage | | - Graphic effect inwhich waves weaker than those of third stage rise |

Furthermore, as shown in 602 of FIG. 2, a user may bring one finger close to a screen and perform a pointing gesture 630 during which some time elapses.

In response thereto, the mobile terminal recognizes the pointing gesture of the user and provides a graphic effect 640 in which water drops fall to the screen creating a ripple. In accordance with an embodiment of the present invention, the mobile terminal outputs a graphic effect in which the size of the ripple increases as if water drops fall from a greater distance as the distance of the finger from the screen increases.

For example, graphic effects for sensors according to the pointing gesture 630 are illustrated in Table 4 below, but the present invention is not limited to the example.

**Table 4**

| 1^{ST} SENSOR | 1^{ST} AND 2^{ND} SENSORS | 2^{ND} SENSOR | 2^{ND} AND 3^{RD} SENSORS |
|---|---|---|---|
| - Recognize fingertip through intensity of current | - First distance is recognized by 1^{st} sensor based on fingertip | - Recognize distance | - 2^{nd} sensor recognizes distance |
| - Recognize proximity distance | - Second distance higher than first distance is recognized by 2^{nd} sensor based on fingertip | - Graphic effect inwhich water dropsfall at third stage stronger than second stage | - 3^{rd} sensorrecognizes pointing hand shape |
| - Graphic effect in which water drops fall weakly at first stage | | | - Graphic effect in which water drops fall at fourth stage stronger than third stage |
| | - Graphic effect in which water drops fall at second stage stronger than first stage | | |

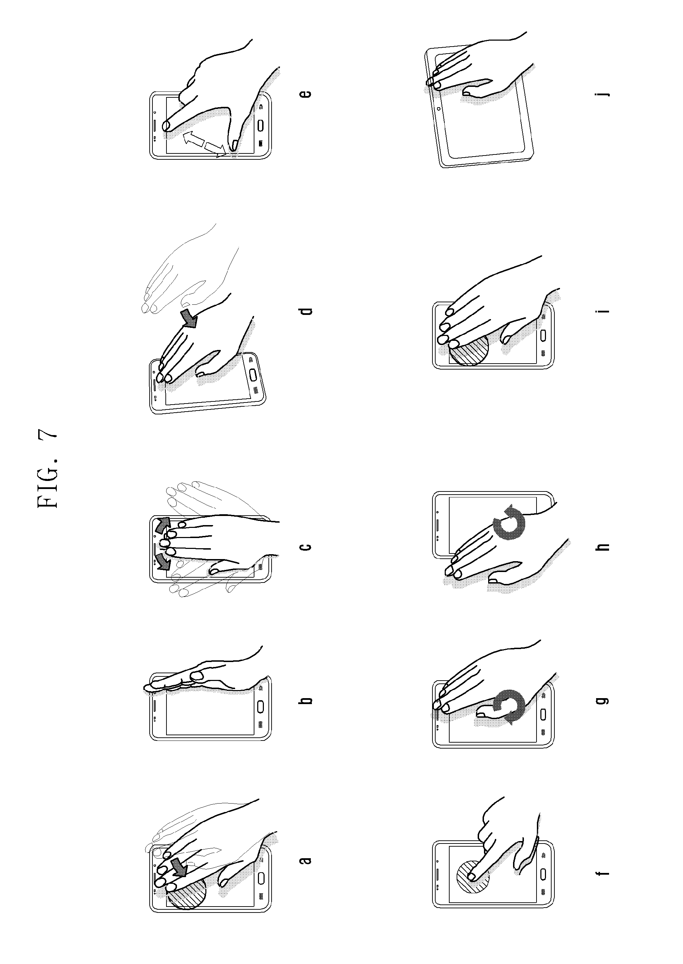

FIGS. 7A to 9Gillustrate various user gestures recognized by a mobile terminal based on the method of operating sensors in accordance with an embodiment of the present invention.

Referring to FIGS. 7A to 7J, the mobile terminal supports a function of recognizing a gesture by selectively switching on gesture recognition sensors in response to a depth value between the user's hand and a screen. In accordance with an embodiment of the present invention, various types of gestures are recognized by selectively switching on and driving sensors in order to extend a range in which a user gesture is recognized.

FIGS. 7A-7J are examples of user interactions using one hand without touching a screen. In FIG. 7A the mobile terminal recognizes a gesture of directing the palm to a touch sensor and an infrared sensor, bringing the palm close to a screen, and then pulling the palm far away from the screen in the state in which the touch sensor and the infrared sensor have been driven. In FIG. 7B, the mobile terminal recognizes a gesture of vertically positioning the palm and then rapidly moving the palm in a specific direction (right, left, upwards, or downwards). In FIG. 7C, the mobile terminal recognizes a gesture of directing the palm to an infrared sensor, a touch sensor, and a camera sensor and then shaking the palm horizontally (left and right directions). In FIG. 7D, the mobile terminal recognizes a gesture of bringing the palm close to the infrared sensor, the touch sensor, and the camera sensor in the state in which an infrared sensor, a touch sensor, and a camera sensor have been driven. In FIG. 7E, the mobile terminal recognizes a gesture of pinching inwards or outwards two fingers in the state in which a touch sensor and a camera sensor have been driven. In FIG. 7F, the mobile terminal recognizes a gesture of measuring the position of a fingertip with a specific distance interposed between the fingertip and a screen in the state in which a touch sensor has been driven. In FIG. 7G, the mobile terminal recognizes a gesture of turning the hand clockwise. In FIG> 7H, the mobile terminal recognizes a gesture of turning the hand counterclockwise, depending on the type of sensor driven. In FIG. 7J, the mobile terminal recognizes a gesture of bringing the hand close to sensors and then remaining covered for a specific time. In FIG. 7J, the mobile terminal recognizes a gesture of pushing the palm close to the sensors.

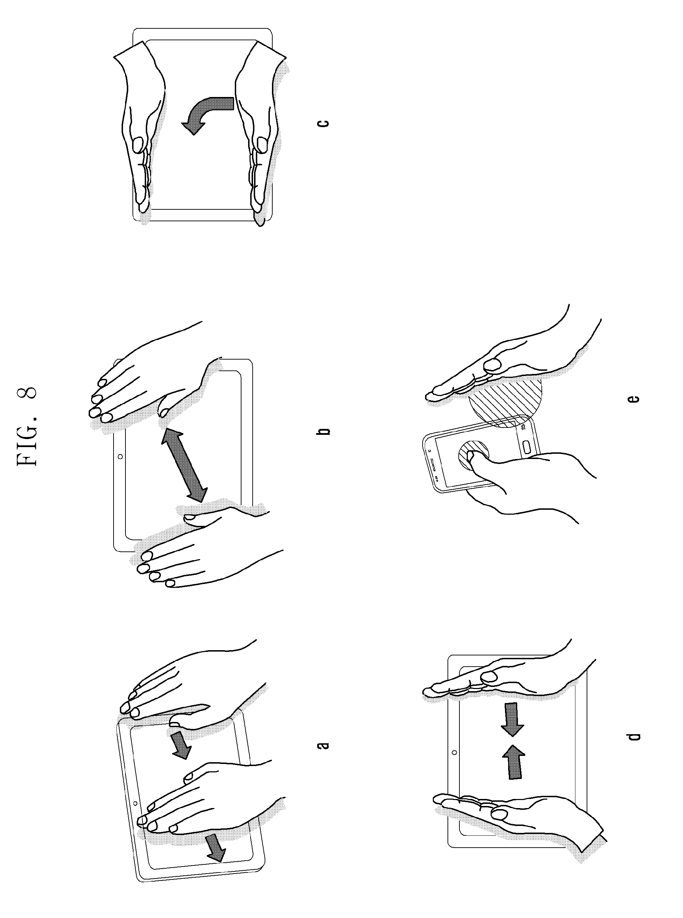

The mobile terminal also recognizes various types of user interactions using both hands depending on selectively driven sensors as shown in FIG. 8. FIG. 8A is a gesture of pushing both palms close to sensors, and FIG. 8B is a gesture of directing both palms to sensors and then widening the distance between both hands. FIG. 8C is a gesture of making both palms face each other horizontally and then rotating the palms so that they face each other vertically. FIG. 8D is a gesture of making both palms face each other horizontally and then moving the palms together. Furthermore, the mobile terminal, in accordance with an embodiment of the present invention, recognizes a gesture of bringing a hand close to a screen in the state in which the screen is being touched by the other hand, but the screen has not been touched by moving hand, in FIG. 8E

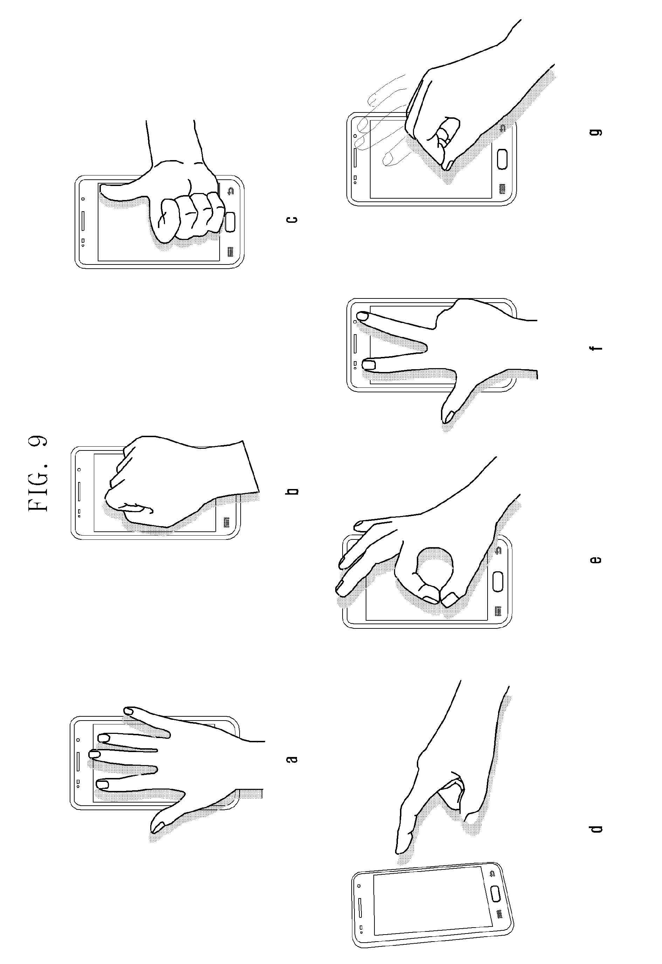

Furthermore, the mobile terminal of the present invention recognizes various hand motion gestures based on shapes of the hand as shown in FIGS. 9A-9G. In FIG. 9A is a hand motion of directing the palm to the input unit 120. FIG. 9B is a hand motion of clenching a fist and directing the fist to the input unit 120. FIG. 9C is a hand motion of facing only the thumb upwards in the state in which a fist has been clenched. FIG. 9D is a hand motion of pointing the index finger at the input unit 120. FIG. 9E is a hand motion of forming a circle using the thumb and the index finger and spreading the remaining fingers. FIG. 9F is a hand motion of spreading a desired number of fingers. FIG. 9G is a hand motion of spreading the palm to sensors and then grabbing fingers. FIGS. 9A-9G are examples of hand motions that can be recognized in accordance with embodiments of the present invention, but the present invention is not limited to the examples.

In accordance with the method and apparatus for operating the sensors of the mobile terminal in accordance with embodiments of the present invention, a plurality of sensors having different characteristics operate like one sensor by selectively switching on the plurality of sensors in response to a depth value, that is, the distance between a device and a user input means, for example, the user's hand.

Furthermore, in accordance with an embodiment of the present invention, gestures are recognized within a wide range because a user input can be flexibly supplemented by another sensor although one sensor does not accurately recognize the user input. Accordingly, the accuracy and reliability of input can be improved. Furthermore, if a specific sensor according to the present invention has high power consumption, power consumption can be reduced by supplementing the specific sensor with a low power sensor at the same recognition range.

As described above, the method and apparatus for operating sensors of a user device according to the present invention have been described above through the specification and drawings. Although specific terms are used, the terms are merely used according to their common meanings in order to easily describe the technical contents of the present invention and assist in the understanding of the present invention. The present invention is not limited to the aforementioned embodiments of the present invention. That is, it will be evident to those skilled in the art that various embodiments based on the technical spirit of the present invention can be implemented.

## Claims

1. A method of operating a plurality of sensors of a user device, the method comprising:
detecting a user input means;
measuring a depth value between the user input means and a screen of the user device;
activating a gesture recognition function by selectively driving one or more of the plurality of sensors based on the measured depth value; and
recognizing a user gesture based on pieces of information collected by the selectively driven sensors.

2. The method of claim 1, wherein activating the gesture recognition function comprises:
determining which of the plurality of sensors has a recognition range comprising the measured depth value; and
selectively driving the determined one or more of the plurality of sensors.

3. The method of claim 1, further comprising driving different sensors in response to a changed depth value when the depth value of the user input means changes.

4. The method of claim 1, further comprising executing a function in response to the user gesture based on each of the pieces of information collected by the selectively driven sensors.

5. The method of claim 4, wherein executing the function comprises providing visual feedback according to the execution of the function based on the depth value of the user input means.

6. The method of claim 1, wherein the user gesture comprises specific functions which are classified and set according to the pieces of information collected by the selectively driven sensors.

7. The method of claim 1, wherein recognizing the user gesture comprises recognizing at least one of a single touch gesture, a multi-touch gesture, a single hovering gesture, a multi-hovering gesture, and a hand motion gesture based on the pieces of information collected by the selectively driven sensors

8. A user device, comprising:
a sensor unit configured to comprise a plurality of sensors for detecting a user input and a change of input; and
a control unit configured to detect a user input means, measure a depth value between the user input means and a screen of the user device, activate a gesture recognition function by selectively driving one or more of the plurality of sensors based on the measured depth value, and recognize a user gesture based on pieces of information collected by the selectively driven sensors.

9. The user device of claim 8, wherein the sensor unit comprises one or more of a touch sensor for recognizing a touch input, a proximity sensor for detecting an approach of an external object or the user input means, a distance measurement sensor for measuring a distance between the touch input means and the user device, an image sensor for collecting images, a motion recognition sensor for recognizing a motion and movement in a 3-D space, a direction sensor for detecting a direction, an acceleration sensor for detecting moving speed, and an environment detection sensor

10. The user device of claim 8, wherein the control unit determines which of the plurality of sensors has a recognition range comprising the measured depth value and selectively drives the determined one or more sensors.

11. The user device of claim 8, wherein the control unit drives different sensors in response to a changed depth value when it is determined that the depth value of the user input means has changed.

12. The user device of claim 8, further comprising a memory unit for storing function execution commands set in response to the user gesture based on the pieces of information collected by the sensors.

13. The user device of claim 8, wherein the control unit provides different visual feedback based on the function execution command and the depth value in response to the recognized user gesture.

14. The user device of claim 8, wherein the user gesture comprises specific functions which are classified and set according to the pieces of information collected by the selectively driven sensors.

15. The user device of claim 8, wherein the control unit recognizes at least one of a touch gesture, a multi-touch gesture, a single hovering gesture, a multi-hovering gesture, and a hand motion gesture based on the pieces of information collected by the selectively driven sensors.
